(19) Europäisches Patentamt
European Patent Office
Office européen des brevets

(11) **EP 2 981 126 A1**

(12) **EUROPEAN PATENT APPLICATION**
published in accordance with Art. 153(4) EPC

(43) Date of publication:
**03.02.2016 Bulletin 2016/05**

(51) Int Cl.:
*H04W 24/10* (2009.01)    *H04W 16/08* (2009.01)
*H04W 16/32* (2009.01)    *H04W 48/16* (2009.01)

(21) Application number: **14775480.8**

(22) Date of filing: **21.02.2014**

(86) International application number:
**PCT/JP2014/054109**

(87) International publication number:
**WO 2014/156397 (02.10.2014 Gazette 2014/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **25.03.2013   JP 2013062379**

(71) Applicant: **NTT DOCOMO, INC.**
**Chiyoda-ku**
**Tokyo 100-6150 (JP)**

(72) Inventors:
• **TAKEDA, Kazuaki**
  **Tokyo 100-6150 (JP)**
• **NAGATA, Satoshi**
  **Tokyo 100-6150 (JP)**
• **ISHII, Hiroyuki**
  **Palo Alto, California 94304 (US)**

(74) Representative: **Hoffmann Eitle**
**Patent- und Rechtsanwälte PartmbB**
**Arabellastraße 30**
**81925 München (DE)**

(54) **USER TERMINAL, WIRELESS BASE STATION, AND WIRELESS COMMUNICATION METHOD**

(57)     The present invention provides a radio communication method suitable for a radio communication system in which a plurality of small cells are located densely within a macro cell. The radio communication method of the present invention includes: measuring, in a user terminal (UE), radio quality in the small cells; and when a reporting condition is met, transmitting, in the user terminal, a measurement report including a measurement result. The reporting condition is defined based on a comparative result between a ratio about measurement values of radio quality of the small cells and a predetermined threshold.

FIG.10

EP 2 981 126 A1

**Description**

TECHNICAL FIELD

The present invention relates to a user terminal, a radio base station and a mobile communication method in a next-generation mobile communication system in which a macro cell and a small cell are located partially overlapping each other.

BACKGROUND ART

In an LTE (Long Term Evolution) system or its succeeding system (for example, LTE Advanced, FRA (Future Radio Access), 4G or the like), study has been made about a radio communication system (for example, HetNet (Heterogeneous Network)) in which a small cell (for example, pico cell, femto cell or the like) having a relatively small coverage of about several meters to several ten meters radius is arranged within a macro cell having a relatively wide coverage of about several hundred meters to several kilometers radius (for example, non-patent literature 1).

In such a radio communication system, some scenarios have been studied including a scenario where a macro cell and a small cell use the same frequency band (for example, also referred to as "co-channel") and a scenario where a macro cell and a small cell use different frequency bands (for example, also referred to as "separate frequency"). To be more specific, in the latter scenario, it has been considered that the macro cell uses a relatively low frequency band (for example, 2 GHz) and the small cell uses a relatively high frequency band (for example, 3.5 GHz or 10 GHz).

CITATION LIST

NON-PATENT LITERATURE

Non-Patent Literature 1: 3GPP TR 36.814 "E-UTRA Further advancements for E-UTRA physical layer aspects"

SUMMARY OF INVENTION

TECHNICAL PROBLEM

In a radio communication system in which smalls cells are located in a macro cell, for the purpose of further increasing throughputs, the multiple small cells are expected to be arranged densely (for example, it may be called "Dense Small Cell").

The present invention was carried out in view of the foregoing, and aims to provide a user terminal, a radio base station and a radio communication method that are suitable for a radio communication system in which a plurality of small cells are located densely within a macro cell.

SOLUTION TO PROBLEM

The present invention provides a radio communication method in a radio communication system in which a macro cell and a plurality of small cells are located in an overlapping manner, the radio communication method comprising: measuring, in a user terminal, radio quality in the small cells; and when a reporting condition is met, transmitting, in the user terminal, a measurement report including a measurement result, wherein the reporting condition is defined based on a comparative result between a ratio about measurement values of radio quality of the small cells and a predetermined threshold.

ADVANTAGEOUS EFFECTS OF INVENTION

According to the present invention, it is possible to provide a user terminal, a radio base station and a radio communication method that are suitable for a radio communication system in which a plurality of small cells are located densely in a macro cell.

BRIEF DESCRIPTION OF DRAWINGS

Fig. 1 is a conceptual diagram of a radio communication system in which a macro cell and small cells use different frequency bands (separate frequency);
Fig. 2 is a diagram for explaining small cells located densely (Dense Small Cells);
Fig. 3 provides diagrams for explaining load balancing between small cells;
Fig. 4 is a diagram illustrating arrangement of small cells under application of load balancing;
Fig. 5 is a diagram for explaining reporting conditions according to a first embodiment of the present invention;
Fig. 6 is a diagram for explaining reporting conditions according to a second embodiment of the present invention;
Fig. 7 is a diagram for explaining reporting conditions according to a third embodiment of the present invention;
Fig. 8 is a diagram for explaining reporting conditions according to a fourth embodiment of the present invention;
Fig. 9 is a diagram for explaining reporting conditions according to a fifth embodiment of the present invention;
Fig. 10 is a sequence diagram illustrating detailed operational steps of a radio communication method according to the present invention;
Fig. 11 is a schematic diagram illustrating an example of the radio communication system according to the present embodiment;
Fig. 12 is a block diagram illustrating the configuration of a user terminal according to the present embodiment;
Fig. 13 is a block diagram illustrating the configuration of a macro base station according to the present embodiment; and
Fig. 14 is a block diagram illustrating the configuration of a small base station according to the present embodiment.

DESCRIPTION OF EMBODIMENTS

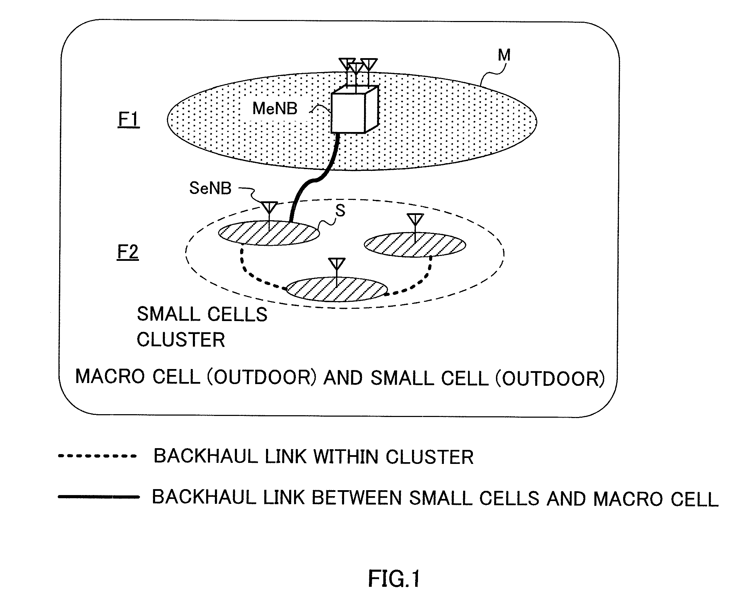

Fig. 1 is a conceptual diagram of a radio communication system in which a macro cell and small cells use different frequency bands (separate frequency). For example, in the radio commutation system illustrated in Fig. 1, there are a macro cell M using a relatively low frequency (carrier) F1 such as 2 GHz or 800 MHz and small cells S each using a relatively high frequency (carrier) F2 such as 3.5 GHz. The macro cell M and the small cells S are located in a geographically overlapping manner.

The radio communication system illustrated in Fig. 1 is configured to include a radio base station (hereinafter referred to as "macro base station") MeNB that form the macro cell M, radio base stations (each hereinafter referred to as "small base station") SeNB that form respective small cells S and a user terminal UE.

As illustrated in Fig. 1, the macro base station MeNB (macro cell M) and each small base station SeNB (small cell S) may be connected to each other by a relatively low-speed (medium delay) link such as X2 interface (Non-Ideal backhaul) or a relatively high-sped (low delay) link such as an optical fiber (Ideal backhaul). In addition, the small base stations SeNB (small cells S) may be also connected to each other by a relatively low-speed (medium delay) link such as X2 interface (Non-Ideal backhaul) or a relatively high-sped (low delay) link such as an optical fiber (Ideal backhaul). If the macro base station MeNB and the small base station SeNB are connected by the optical fiber, the small base station SeNB may be a Remote Radio Head station (RRH station) connected to the macro base station MeNB.

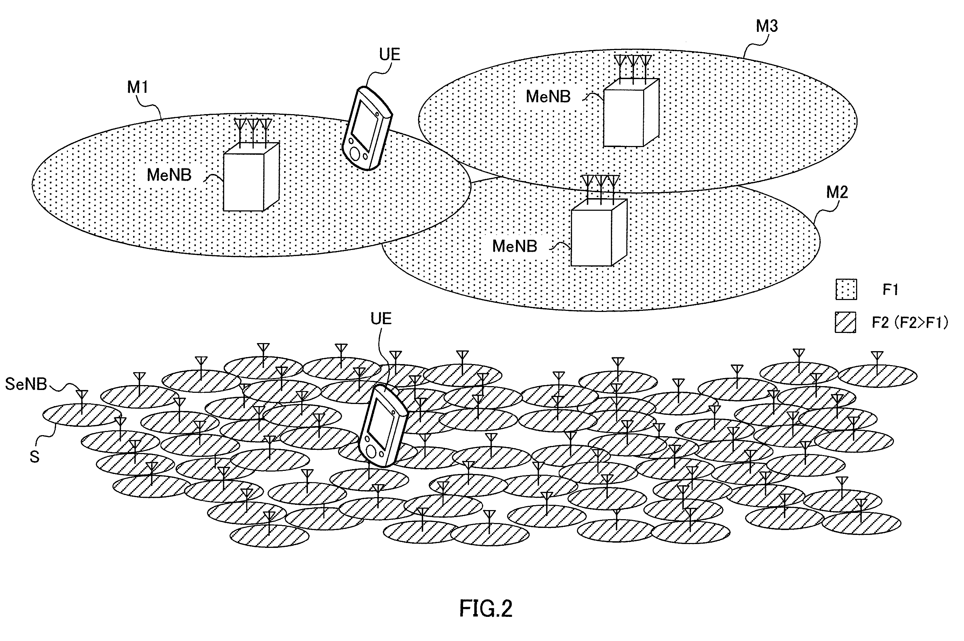

Fig. 2 is an explanatory diagram of small cells located densely (Dense Small Cells). In each small cell S using a higher frequency F2 than the frequency F1 of the macro cell M, due to deterioration in propagation characteristic, the cell size is usually small. In this case, as illustrated in Fig. 2, small cells S are located densely thereby to try to achieve increase in transmission opportunities per unit area and also achieve further increase in capacity (throughput performance).

As illustrated in Fig. 2, when small cells S are located densely, interference between the densely located small cells S is expected to be large. Particularly, in an environment where there is no building nor obstruction and an unobstructed view is afforded, reception power from a near small cell S becomes large, which results in an increasing influence of interference from the near small S.

Also as illustrated in Fig. 2, when the small cells S are located densely, the number of user terminals UE and traffic per small cell S are expected to fluctuate greatly. As the macro cell M has a relatively large coverage area, the number of user terminals UE and traffic per macro cell M are averaged to some degree. However, as the small cell S has a only local coverage area, the small cell S is less affected by averaging than the macro cell M. Therefore, the number of user terminals UE and traffic per small cell S are expected to fluctuate largely.

Then, when the user distribution and traffic distribution are unbalanced between small cells S (for example, more user terminals UE and traffic concentrate on a particular small cell S), instead of a small cell S of best radio quality (best cell, nearest cell), a small cell S with less user terminals UE and high potential throughputs is expectedly controlled to be connected to the user terminal UE (generally called "Load balancing").

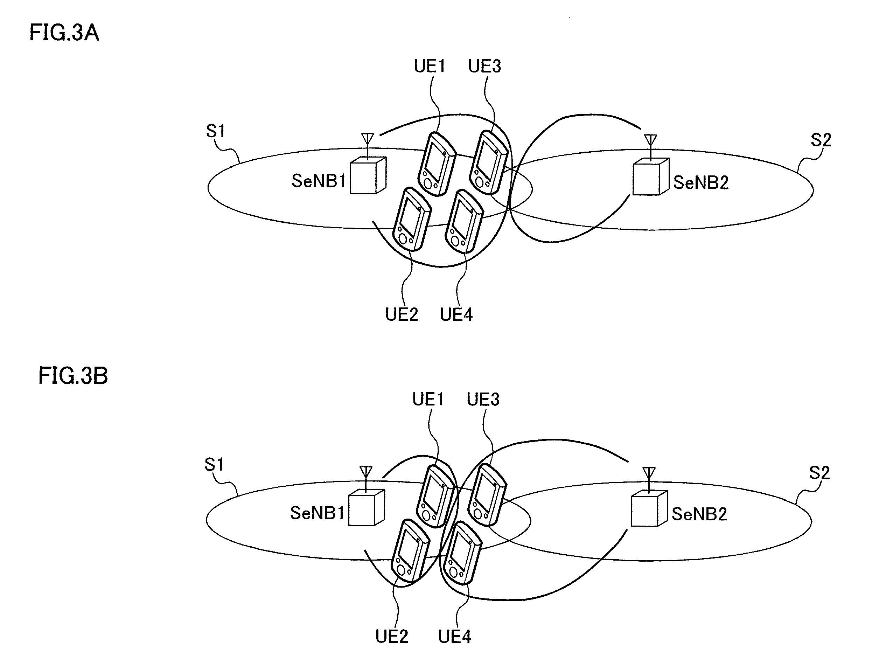

Fig. 3 is an explanatory view of load balancing between small cells. For example, in Fig. 3A, all user terminals UE 1 to UE 4 within the small cell S1 are connected to the small base station SeNB 1 of best radio quality (small cell S1). Therefore, the user terminals UE and traffic inevitably concentrate on the small base station SeNB 1 (small cell S1).

Then, as illustrated in Fig. 3B, some of the user terminals UE 1 to UE 4 within the small cell S1 (here, user terminals UE 3 and UE 4) are considered to be connected not to the small base station SeNB 1 of best radio quality, but to the small base station SeNB 2 (small cell S2) adjacent to the small base station SeNB 1.

In Fig. 3B, the radio quality of the user terminals UE 3 and UE 4 from the small base station SeNB 2 is probably poorer than the radio quality from the small base station SeNB 1. On the other hand, in the small cell S2, no user terminal UE is located. Therefore, the user terminals UE 3 and UE 4 are connected to the small base station SeNB 2 (small cell S2) thereby allowing higher throughput than the throughput when they are connected to the small base station SeNB 1. And, load is distributed over the small base stations SeNB 1 and SeNB 2 (small cells S1 and S2) (load balanced).

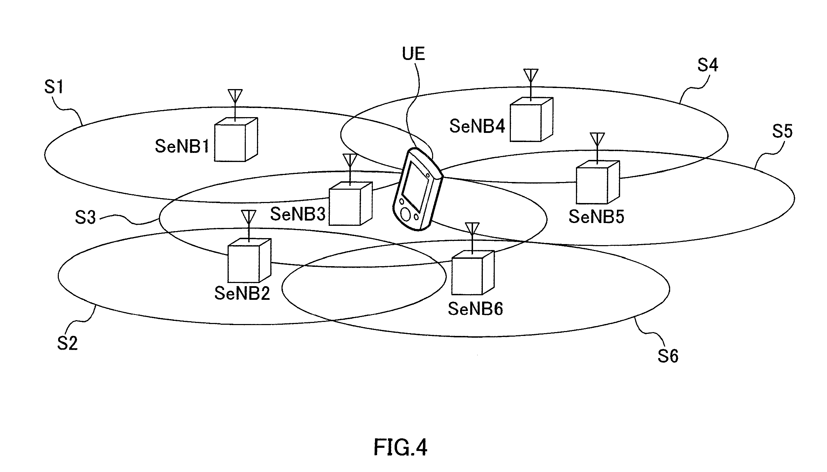

In the above-mentioned load balancing, the user terminal UE is expected to measure not only radio quality in a small cell S of best radio quality, but also ratio quality of a adjacent small cell S (a neighbor small). For example, in the case illustrated in Fig. 4, the user terminal UE is expected to measure not only radio quality in the small cell S3 but also radio quality in the neighbor small cells S1, S2, S4 to S6.

In the meantime, when the user terminal UE tries to measure radio quality in the small cells S1 to S6 using synchronization signals (primary synchronization signals (PSS), secondary synchronization signals (SSS), etc.) and cell-specific reference signals (CRSs) from the small base stations SeNB 1 to SeNB 5, the user terminal may be unable to detect a neighbor small cell due to pilot pollution.

Here, the pilot pollution means deterioration of SINR (Signal to Interference Noise Ratio) of pilot signals (including the above-mentioned synchronization signals (PSS, SSS) and CRSs) from the small base station SeNB nearest to the user terminal UE (SeNB 3 in Fig. 4) caused by pilot signals from neighbor small base stations SeNBs (SeNB 1, SeNB 2, SeNB 4 to SeNB 6 in Fig. 4). Here, the pilot signals from these small base stations SeNB 1, SeNB 2, SeNB 4 to SeNB 6 become interference signals to the pilot signals from the small base station SeNB 3.

Here, when the small cells S are located densely, measurement of radio quality in small cells S1 to S6 is considered to be performed using measurement reference signals that are orthogonal (or quasi-orthogonal) between the small cells S. Here, the measurement reference signals may be any signals as long as the signals are orthogonal or quasi-orthogonal to each other such as channel state information reference signals or discovery signals.

Generally, the user terminal UE measures radio quality in a cell (including a macro cell M and a small cell S) and reports the measured radio quality to a radio base station (including a macro base station MeNB and a small base station SeNB, and also called eNodeB (eNB)). The radio base station determines a cell to which the user terminal is to be connected (specifically, cell of best radio quality) based on the radio quality reported from the user terminal UE.

Such reporting of the measurement result of radio quality is also called "measurement report". Measurement report is generally transmitted from the user terminal UE when a reporting condition is met (an event is triggered). Such measurement report is called "Event Triggered reporting".

As this reporting condition (event trigger), there are, for example, a condition when RSRP (Reference Signal Received Power) of a neighbor cell becomes better than RSRP of a serving cell (event A3), a condition that RSRP of a neighbor cell becomes better than a predetermined threshold (event A4), a condition that RSRP of a serving cell becomes poorer than a first threshold and RSRP of a neighbor cell becomes better than a second threshold (event A5), and so on.

However, when the above-mentioned load balancing is performed, the user terminal UE needs to be connected not to the small cell S of best radio quality (small base station SeNB) but to a neighbor cell that is different from the small cell S of best radio quality. Accordingly, even if the user terminal UE transmits a measurement report based on the reporting condition (for example, the above-mentioned event A3) suitable for connection of the user terminal UE to the small cell S of best radio quality, load balancing between small cells S is unlikely to be achieved appropriately.

That is, "Event Triggered Reporting" is essentially such an operation that the user terminal UE reports measured radio quality to the radio base station in the best timing for control like handover in the radio base station, however, none of the currently provided events is most suitable for load balancing.

Then, the present inventors have come up the idea that, in a radio communication system where a plurality of small cells S are located densely within a macro cell M, transmission of a measurement report is allowed on a reporting condition suitable for the case where a user terminal UE is connected to a neighbor cell that is different from a small cell S of best radio quality or load balancing is performed, thereby to achieve load balancing between the small cells S, and the present inventors have finally completed the present invention.

The present invention provides a radio communication method in which a user terminal measures radio quality in a plurality of small cells S and transmits a measurement report including a measurement result when a reporting condition is met. Here, the reporting condition is determined based on a comparative result between a ratio of measurement values of radio quality in a plurality of small cells S and a predetermined threshold.

In the radio communication method according to the present invention, not a comparative result between the measurement values of radio quality in a plurality of small cells per se and the predetermined threshold, but a comparative result between a ratio of the measurement values and the predetermined threshold is used to define the reporting condition. With this structure, the user terminal UE is able to transmit a measurement report in the timing suitable for the user terminal UE to be connected to a neighbor cell that is adjacent to the small cell S of best radio quality. Consequently, it is possible to achieve load balancing between small cells S.

(REPORTING CONDITION)

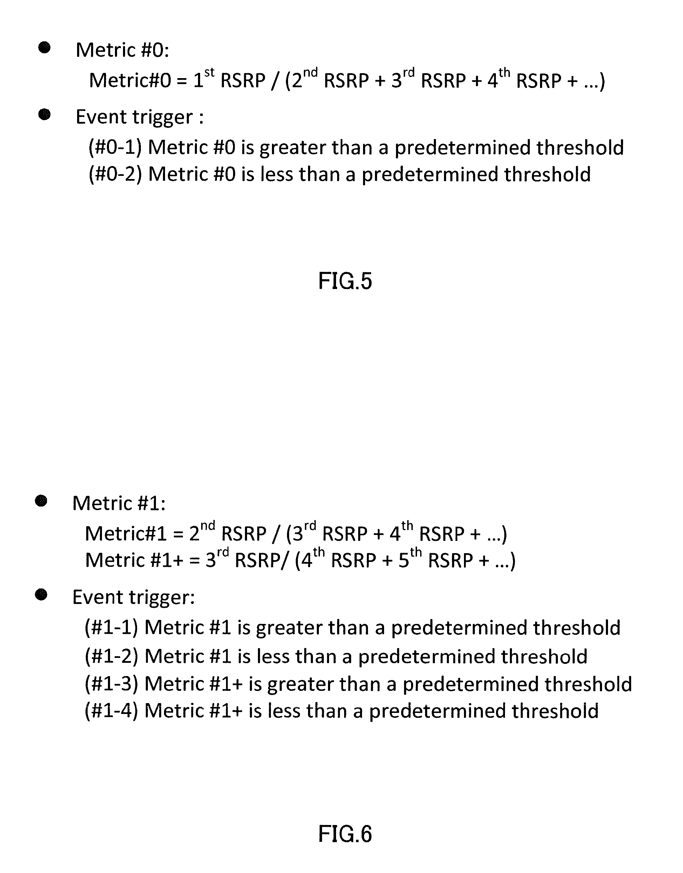

With reference to Figs. 5 to 9, description is made about reporting conditions used in the radio communication method of the present invention. As described above, the reporting condition is defined based on a comparative result between a ratio (Metric) of measurement values of radio quality in a plurality of small cells S and a predetermined threshold (absolute value).

In Figs. 5 to 9, reception power from a small base station SeNB (RSRP: Reference Signal Received Power) is used as radio quality in the small cell S, however this is not intended for limiting the present invention. The radio quality in the small cell S as used may be reception quality of measurement reference signal (RSRQ: Reference Signal Received Quality or SINR: Signal-to-Interference plus Noise power Ratio, or SNR: Signal-Noise Ratio) from the small base station SeNB or path loss between the small base station SeNB and the user terminal UE.

In Figs. 5 to 9, measurement values of radio quality in a plurality of small cells S are assigned with numbers 1, 2, 3, ..., in descending order of radio quality. In Figs. 5 to 9, out of the measurement values of radio quality in the plural small cells S, 1st RSRP is the best measurement value, 2nd RSRP is the second best measurement value, 3rd RSRP is the third best measurement value, 4th RSRP is the fourth best measurement value, and so on.

In Figs. 5 to 9, description is made about an example where a reporting condition is met when the ratio (Metric) based on measurement values of radio quality in the plural small cells S is greater than or smaller than a predetermined threshold. However, this is not intended for limiting the present invention. The reporting condition may be met when the ratio (Metric) is equal to or smaller than the predetermined threshold, or equal to or greater than the predetermined threshold. The ratio (Metric) may be added with a predetermined offset or a predetermined parameter.

(FIRST EMBODIMENT)

Fig. 5 is an explanatory diagram of the reporting condition according to the first embodiment. The reporting condition according to the first embodiment is defined based on a comparative result between Metric #0 and a predetermined threshold. Here, Metric #0 is a ratio of the best measurement value among the measurement values of radio quality in the plural small cells S to a sum of the second and later measurement values.

For example, when RSRP is used as radio quality in the small cell S, Metric #0 may be expressed by the following expression. The following expression is calculated using a true value.

$$\text{Metric } \#0 = 1^{st} \text{ RSRP}/(2^{nd} \text{ RSRP} + 3^{rd} \text{ RSRP} + 4^{th} \text{ RSRP} + ...)$$

Such an expression is generally calculated using true values, or otherwise, it may be calculated using dB values.

Further, the reporting condition (Event trigger) in Fig. 5 may be met in the following case. Here, the predetermined threshold is an absolute value and may be changed by RRC signaling. The following determination may be made using true values or dB values.

Reporting condition #0-1:

Metric #0 is greater than a predetermined threshold

Reporting condition #0-2:

Metric #0 is less than a predetermined threshold

When the reporting condition #0-1 is met, the user terminal UE is considered as being located at the center of the small cell S with the best measurement value. In such a case, the user terminal UE transmits a measurement report thereby to be able to report that the user terminal UE is difficult to connect to the small cell with the second or later best measurement value.

In addition, use of not the normal SINR, but Metric #0 has meaning and effects, which are explained below. Generally, in the case where pilot signals transmitted from a plurality of cells are orthogonalized in order to avoid pilot pollution, if SINR from a certain cell is simply measured, then pilot signals from other cells are not taken into calculation as the part "I" of SINR, that is, as interference signals. Here, pilot signals from the plural cells are orthogonal to each other, but data signals from the plural cells are not orthogonal. From the viewpoint of data signals, such SINR is not an appropriate index. Here, in the case of using Metric #0, even if pilot signals from a plurality of cells are orthogonal to each other but data signals from the plural cells are not orthogonal to each other, appropriate control is allowed to be performed with this Metric equivalent to SINR.

When the reporting condition #0-2 is met, the user terminal UE is considered as being located at the cell edge of the small cell S with the best measurement value. In this case, the user terminal UE transmits a measurement value thereby to be able to report that the user terminal UE is able to be connected to the small cell S with the second best measurement value. Regarding the meaning and effect of using not the normal SINR but Metric #0, they are the same as those described above and its explanation is omitted here.

(SECOND EMBODIMENT)

Fig. 6 is an explanatory view of the reporting condition according to the second embodiment. The reporting condition according to the second embodiment is defined based on a comparative result between Metric $\#1_i$ ($i \geq 2$) and a predetermined threshold. Here, Metric $\#1_i$ ($i \geq 2$) is a ratio of the i-th best measurement value out of measurement values of radio quality in the plural small cells to a sum of i+1-th and later measurement values. According to Metric $\#1_i$ ($i \geq 2$), the small cell S with the best measurement value is eliminated.

For example, when RSRP is used as radio quality in the small cell S, Metric $\#1_i$ (Here, i = 2, 3, but i may be 4 or greater) may be expressed by the following expression. In the following, Metric $\#1_2$ is expressed as Metric #1 and Metric $\#1_3$ is expressed as Metric #1+. The following expression is calculated using true values.

$$\text{Metric } \#1 = 2^{nd} \text{ RSRP}/(3^{rd} \text{ RSRP} + 4^{th} \text{ RSRP} + \ldots)$$

$$\text{Metric } \#1+ = 3^{rd} \text{ RSRP}/(4^{th} \text{ RSRP} + 5^{th} \text{ RSRP} + \ldots)$$

These expressions are calculated using true values, but may be calculated using dB values. The following determination may be made using true values or dB values.

In Fig. 6, the reporting condition (Event trigger) may be met, for example, in the following case. The predetermined threshold is an absolute value and may be changed by RRC signaling. The following determination may be made using true values or dB values.

Reporting condition #1-1:

Metric #1 is greater than a predetermined threshold

Reporting condition # 1-2:

Metric #1 is less than a predetermined threshold

Reporting condition #1-3:

Metric #1+ is greater than a predetermined threshold

Reporting condition #1-4:

Metric #1+ is less than a predetermined threshold

When the reporting condition #1-1 is met, the user terminal UE is considered as being sufficiently adjacent to the small cell S with the second best measurement value, as compared with small cells S with third and later best measurement values, in terms of the distance or path loss. In such a case, the user terminal UE transmits a measurement result thereby to be able to report that the user terminal UE is able to be connected to the small cell S with the second best measurement value. Here, the meaning and effect of using Metric #1 instead of normal SINR are the same as those of Metric #0 described above and its explanation is omitted here.

In this second embodiment, if the normal SINR is used and there is pilot pollution, it is difficult to obtain an accurate ratio of "I" of the i-th best cell S and i+1-th and later best cells after eliminating signal power of a cell with the strongest signal power, like in Metric #1. That is, in the second embodiment, not the normal SINR, but Metric #1 needs to be used.

When the reporting condition #1-2 is met, the user terminal UE is considered as not being sufficiently adjacent to the small cell S with the second best measurement value, as compared with small cells S with third and later best measurement values, in terms of the distance or path loss. In such a case, the user terminal UE transmits a measurement result thereby to be able to report that the user terminal UE is difficult to connect to the small cell S with the second best measurement value. Here, the meaning and effect of using Metric #1 instead of normal SINR are the same as described above and its explanation is omitted here.

When the reporting condition #1-3 is met, the user terminal UE is considered as being sufficiently adjacent to the small cell S with the third best measurement value, as compared with small cells S with fourth and later best measurement values, in terms of the distance or path loss. In such a case, the user terminal UE transmits a measurement result thereby to be able to report that the user terminal UE is able to be connected to the small cell S with the third best measurement value. Here, the meaning and effect of using Metric #1+ instead of normal SINR are the same as described above and its explanation is omitted here.

When the reporting condition #1-4 is met, the user terminal UE is considered as not being sufficiently adjacent to the small cell S with the third best measurement value, as compared with small cells S with fourth and later best measurement values, in terms of the distance or path loss. In such a case, the user terminal UE transmits a measurement result thereby to be able to report that the user terminal UE is difficult to connect to the small cell S with the third best measurement value. Here, the meaning and effect of using Metric #1+ instead of normal SINR are the same as described above and its explanation is omitted here.

Here, the reporting conditions #1-1 to #1-4 are met in accordance with comparative results between either of Metric #1 and Metric #1+ and the predetermined threshold, but may be met in accordance with a comparative result of both of Metric #1 and Metric #1+ and the predetermined threshold. For example, the case there "Metric #1 is greater than the first threshold and Metric #1+ is greater than the second threshold" may be defined as the reporting condition.

(THIRD EMBODIMENT)

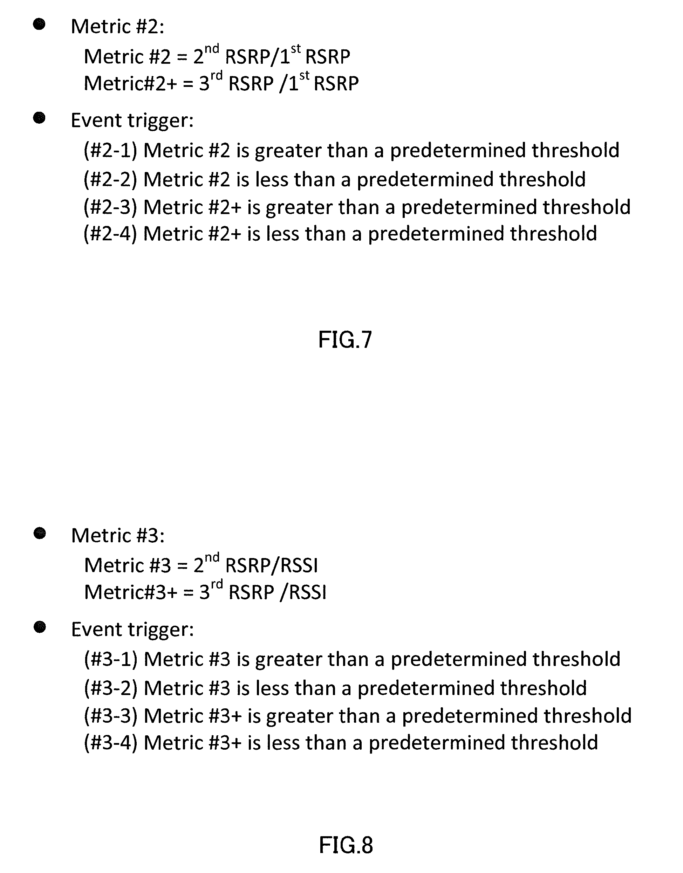

Fig. 7 is an explanatory diagram of the reporting condition according to the third embodiment. The reporting condition according to the third embodiment is met in accordance with a comparative result between Metric $\#2_i$ ($i \geq 2$) and a predetermined threshold. Here, Metric $\#2_i$ ($i \geq 2$) is a ratio of the i-th best measurement value ($i \geq 2$) out of measurement values of radio quality in the plural small cells S and the best measurement value. According to Metric $\#2_i$ ($i \geq 2$), relation between the small cell S with the i-th best measurement value and the small cell S with the best measurement value is illustrated.

For example, when RSRP is used as radio quality in the small cell S, Metric $\#2_i$ (Here, i = 2, 3, but i may be 4 or greater) may be expressed by the following expression. In the following, Metric $\#2_2$ is expressed as Metric #2 and Metric $\#2_3$ is expressed as Metric #2+. The following expression is calculated using true values.

$$\text{Metric } \#2 = 2^{nd} \text{ RSRP}/1^{st} \text{ RSRP}$$

$$\text{Metric } \#2+ = 3^{rd} \text{ RSRP}/1^{st} \text{ RSRP}$$

These expressions are calculated using true values, but may be calculated using dB values. The following determination may be made using true values or dB values.

In Fig. 7, the reporting condition (Event trigger) may be met, for example, in the following case. The predetermined threshold is an absolute value and may be changed by RRC signaling. The following determination may be made using true values or dB values.

Reporting condition #2-1:

Metric #2 is greater than a predetermined threshold

Reporting condition #2-2:

Metric #2 is less than a predetermined threshold

Reporting condition #2-3:

Metric #2+ is greater than a predetermined threshold

Reporting condition #2-4:

Metric #2+ is less than a predetermined threshold

When the reporting condition #2-1 is met, the small cell S with the second best measurement value is considered as being relatively adjacent to the small cell S with the best measurement value. In such a case, the user terminal UE transmits a measurement result thereby to be able to report that the user terminal UE is able to be connected to the small cell S with the second best measurement value. Here, the meaning and effect of using Metric #2 instead of normal SINR are the same as those of Metric #0 to Metric #1 described above and its explanation is omitted here.

When the reporting condition #2-2 is met, the small cell S with the second best measurement value seems to be relatively far from the small cell S with the best measurement value. In such a case, the user terminal UE transmits a measurement result thereby to be able to report that the user terminal UE is difficult to connect to the small cell S with the second best measurement value. Here, the meaning and effect of using Metric #2 instead of normal SINR are the same as those of Metric #0 to Metric #1 described above and its explanation is omitted here.

When the reporting condition #2-3 is met, the small cell S with the third best measurement value is considered as being relatively adjacent to the small cell S with the best measurement value. In such a case, the user terminal UE transmits a measurement result thereby to be able to report that the user terminal UE is able to be connected to the small cell S with the third best measurement value. Here, the meaning and effect of using Metric #2 instead of normal SINR are the same as those of Metric #0 to Metric #1 described above and its explanation is omitted here.

When the reporting condition #2-4 is met, the small cell S with the third best measurement value is considered as being relatively far from the small cell S with the best measurement value. In such a case, the user terminal UE transmits a measurement result thereby to be able to report that the user terminal UE is difficult to connect to the small cell S with the third best measurement value. Here, the meaning and effect of using Metric #2 instead of normal SINR are the same as those of Metric #0 to Metric #1 described above and its explanation is omitted here.

Here, the reporting conditions #2-1 to #2-4 are met in accordance with comparative results between either of Metric #2 and Metric #2+ and the predetermined threshold, but may be met in accordance with a comparative result of both of Metric #2 and Metric #2+ and the predetermined threshold. For example, the case there "Metric #2 is greater than the first threshold and Metric #2+ is greater than the second threshold" may be defined as the reporting condition.

(FOURTH EMBODIMENT)

Fig. 8 is an explanatory diagram of the reporting condition according to the fourth embodiment. The reporting condition according to the fourth embodiment is met in accordance with a comparative result between Metric $\#3_i$ ($i \geq 2$) and a predetermined threshold. Here, Metric $\#3_i$ ($i \geq 2$) is a ratio of the i-th best measurement value out of measurement values of radio quality in the plural small cells S to a sum of measurement values of the plural small cells S (or sum of measurement values of the plural small cells and noise power). Metric $\#3_i$ ($i \geq 2$) illustrates relation between the small cell S with the i-th best measurement value and the sum of measurement values of all the small cells S (or sum of measurement values and noise power of all the small cells S).

For example, when RSRP is used as radio quality in the small cell S, Metric $\#3_i$ (Here, i = 2, 3, but i may be 4 or greater) may be expressed by the following expression. In the following, Metric $\#3_2$ is expressed as Metric #3 and Metric $\#3_3$ is expressed as Metric #3+. Here, RSSI (Reference Signal Strength Indicator) is equal to a sum of RSRP and noise power of the plural small cells S measured by the user terminal UE. Otherwise, RSSI may be defined as a sum of RSRP of the plural small cells S measured by the user terminal UE. The following expression is calculated using true values.

$$\mathrm{Metric}\ \#3 = 2^{\mathrm{nd}}\ \mathrm{RSRP/RSSI}$$

$$\mathrm{Metric}\ \#3+ = 3^{\mathrm{rd}}\ \mathrm{RSRP/RSSI}$$

These expressions are calculated using true values, but may be calculated using dB values. The following determination may be made using true values or dB values.

In Fig. 8, the reporting condition (Event trigger) may be met, for example, in the following case. The predetermined threshold is an absolute value and may be changed by RRC signaling. The following determination may be made using true values or dB values.

Reporting condition #3-1:

Metric #3 is greater than a predetermined threshold

Reporting condition #3-2:

Metric #3 is less than a predetermined threshold

Reporting condition #3-3:

Metric #3+ is greater than a predetermined threshold

Reporting condition #3-4:

Metric #3+ is less than a predetermined threshold

When the reporting condition #3-1 is met, the user terminal UE is considered as being relatively adjacent to the small cell S with the second best measurement value. In such a case, the user terminal UE transmits a measurement result thereby to be able to report that the user terminal UE is able to be connected to the small cell S with the second best measurement value. Here, the meaning and effect of using Metric #3 instead of normal SINR are the same as those of Metric #0 to Metric #2 described above and its explanation is omitted here.

When the reporting condition #3-2 is met, the user terminal UE is considered as being relatively far from the small cell S with the second best measurement value. In such a case, the user terminal UE transmits a measurement result thereby to be able to report that the user terminal UE is difficult to connect to the small cell S with the second best measurement value. Here, the meaning and effect of using Metric #3 instead of normal SINR are the same as those of Metric #0 to Metric #2 described above and its explanation is omitted here.

When the reporting condition #3-3 is met, the user terminal UE is considered as being relatively adjacent to the small cell S with the third best measurement value. In such a case, the user terminal UE transmits a measurement result thereby to be able to report that the user terminal UE is able to be connected to the small cell S with the third best measurement value. Here, the meaning and effect of using Metric #3 instead of normal SINR are the same as those of Metric #0 to Metric #2 described above and its explanation is omitted here.

When the reporting condition #3-4 is met, the user terminal UE is considered as being relatively far from the small cell S with the third best measurement value. In such a case, the user terminal UE transmits a measurement result thereby to be able to report that the user terminal UE is difficult to connect to the small cell S with the third best measurement value. Here, the meaning and effect of using Metric #3 instead of normal SINR are the same as those of Metric #0 to Metric #2 described above and its explanation is omitted here.

Here, the reporting conditions #3-1 to #3-4 are met in accordance with comparative results between either of Metric #3 and Metric #3+ and the predetermined threshold, but may be met in accordance with a comparative result of both of Metric #3 and Metric #3+ and the predetermined threshold. For example, the case there "Metric #3 is greater than the first threshold and Metric #3+ is greater than the second threshold" may be defined as the reporting condition.

(FIFTH EMBODIMENT)

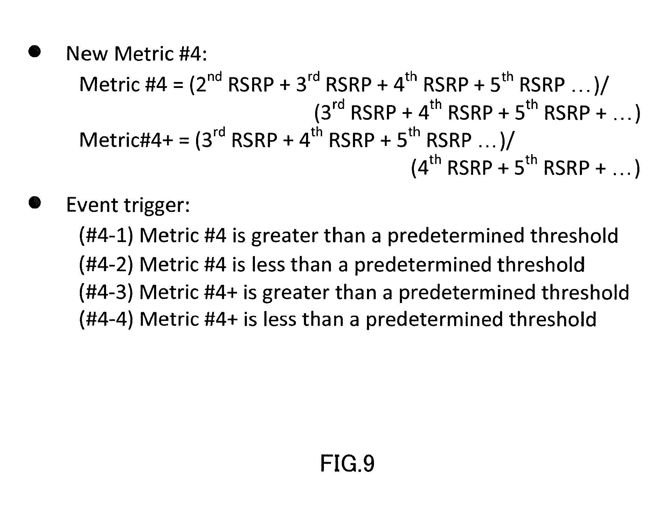

Fig. 9 is an explanatory diagram of the reporting condition according to the fifth embodiment. The reporting condition according to the fifth embodiment is met in accordance with a comparative result between Metric #$4_i$ ($i \geq 2$) and a predetermined threshold. Here, Metric #$4_i$ ($i \geq 2$) is a ratio of a sum of the i-th and later best measurement values out of measurement values of radio quality in the plural small cells S to a sum of i+1-th and later best measurement values.

The meaning of Metric #$4_i$ is explained below. Usage and meaning of Metric #$4_i$ are basically the same as those of Metric #1. For example, regarding Metric #$4_2$, it is determined whether or not the user terminal UE is closer in terms of distance or path loss to the cell with the second best measurement value than any of the cells with third or later best measurement value.

Here, as compared with Metric #$2_i$, Metric #$4_i$ has a common numerator value (for example, "3rd RSRP + 4th RSRP + 5th RSRP" in the case of Metric #4 described later). Therefore, dispersion of Metric itself becomes small and it has a merit of being able to set a threshold accurately. Conversely, when dispersion of Metric itself is large like Metric #2, the range of a threshold to set becomes large, which results in difficulty in accurate setting of a threshold.

For example, when RSRP is used as radio quality in the small cell S, Metric #$4_i$ (Here, i = 2, 3, but i may be 4 or greater) may be expressed by the following expression. In the following, Metric #$4_2$ is expressed as Metric #4 and Metric #$4_3$ is expressed as Metric #4+. The following expression is calculated using true values.

$$\text{Metric } \#4 = (2^{nd} \text{ RSRP} + 3^{rd} \text{ RSRP} + 4^{th} \text{ RSRP} + 5^{th} \text{ RSRP} + ...) /$$

$$(3^{rd} \text{ RSRP} + 4^{th} \text{ RSRP} +$$

$$5^{th} \text{ RSRP} + ...)$$

$$\text{Metric } \#4+ = (3^{rd} \text{ RSRP} + 4^{th} \text{ RSRP} + 5^{th} \text{ RSRP} + ...) /$$

$$(4^{th} \text{ RSRP} + 5^{th} \text{ RSRP} +$$

$$...)$$

These expressions are calculated using true values, but may be calculated using dB values. The following determination may be made using true values or dB values.

In Fig. 9, the reporting condition (Event trigger) may be met, for example, in the following case. The predetermined threshold is an absolute value and may be changed by RRC signaling. The following determination may be made using true values or dB values.

Reporting condition #4-1:

Metric #4 is greater than a predetermined threshold

Reporting condition #4-2:

Metric #4 is less than a predetermined threshold

Reporting condition #4-3:

Metric #4+ is greater than a predetermined threshold

Reporting condition #4-4:

Metric #4+ is less than a predetermined threshold

When the reporting condition #4-1 is met, the user terminal UE is considered as suffering from large interference from the small cell with the second best measurement value (in other words, it is considered as being close to the small cell with the second best measurement value). In such a case, the user terminal UE transmits a measurement result thereby to be able to report that the user terminal UE is able to be connected to the small cell S with the second best measurement value. Here, the meaning and effect of using Metric #4 instead of normal SINR are the same as those of Metric #0 to Metric #3 described above and its explanation is omitted here.

When the reporting condition #4-2 is met, the user terminal UE is considered as suffering from large interference from the small cell with the third and later best measurement values (in other words, it is considered as not being sufficiently close to the small cell with the second best measurement value). In such a case, the user terminal UE transmits a measurement result thereby to be able to report that the user terminal UE is difficult to connect to the small cell S with the second best measurement value. Here, the meaning and effect of using Metric #4 instead of normal SINR are the same as those of Metric #0 to Metric #3 described above and its explanation is omitted here.

When the reporting condition #4-3 is met, the user terminal UE is considered as suffering from large interference from the small cell with the third best measurement value (in other words, it is considered as being close to the small cell with the third best measurement value). In such a case, the user terminal UE transmits a measurement result thereby to be able to report that the user terminal UE is able to be connected to the small cell S with the third best measurement value. Here, the meaning and effect of using Metric #4 instead of normal SINR are the same as those of Metric #0 to Metric #3 described above and its explanation is omitted here.

When the reporting condition #4-4 is met, the user terminal UE is considered as suffering from large interference from the small cell with the fourth and later best measurement values (in other words, it is considered as not being sufficiently close to the small cell with the third best measurement value). In such a case, the user terminal UE transmits a measurement result thereby to be able to report that the user terminal UE is difficult to connect to the small cell S with the third best measurement value. Here, the meaning and effect of using Metric #4 instead of normal SINR are the same as those of Metric #0 to Metric #3 described above and its explanation is omitted here.

(OPERATION)

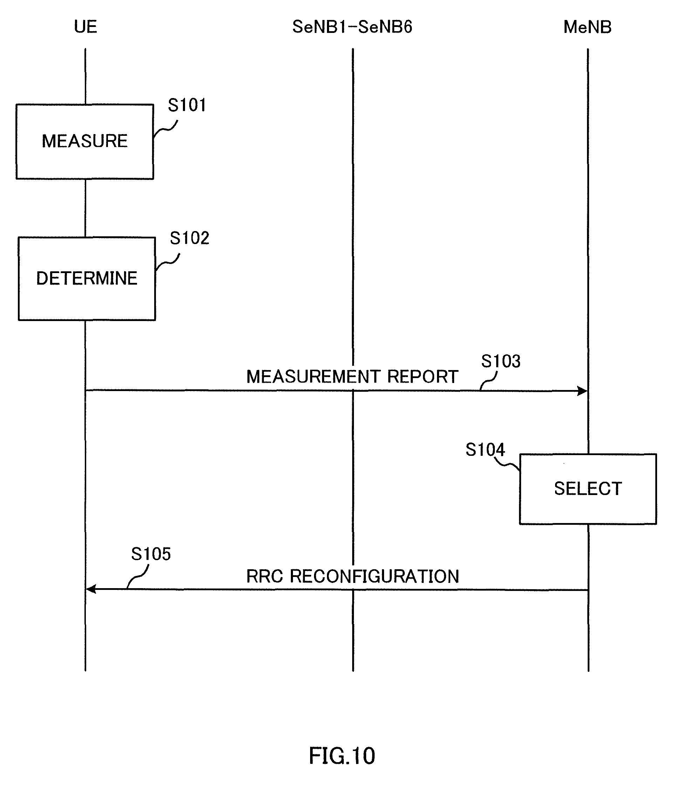

With reference to Fig. 10, description is made about the operational steps of the radio communication method according to the present invention. In Fig. 10, any of the above-described first to fifth embodiments may be used. Also in Fig. 10, it is assumed that small cells S1 to S6 (small base stations SeNB 1 to SeNB 6) are located as illustrated in Fig. 4, however, this is not intended for limiting the present invention. Besides, in Fig. 4, the macro cell M (not illustrated) is arranged as overlapping the small cells S1 to S6, however, this is not intended for limiting the present invention. Each of the macro cell M and the small cells S (macro base station MeNB and small base stations SeNB) may be a transmission point or the like.

As illustrated in Fig. 10, the user terminal UE measures radio quality in each of the small cells S1 to S6 (Step S101). Specifically, the user terminal UE measures radio quality in the small cells S1 to S6 using measurement reference signals transmitted from the small base stations SeNB 1 to SeNB 6, respectively.

As described above, the measurement reference signals include, but are not limited to, channel state measurement reference signals (CSI-RSs), discovery signals and so on. The measurement reference signals may be signals orthogonal or quasi-orthogonal between small cells S. The radio quality in a small cell S may be reception power of a measurement reference signal (for example, RSRP), reception quality of a measurement reference signal (for example, RSRQ, SINR, SNR, etc.) or path loss.

The user terminal UE determines whether the reporting condition is met or not (Step S102). In Step S102, the user terminal UE may use any of reporting conditions according to the first to fifth embodiments (see Figs. 5 to 9). Here, the reporting conditions and Metrics used by the user terminal UE may be given from the macro base station MeNB by RRC signaling.

When the reporting condition is met, the user terminal UE transmits, to the macro base station MeNB, a measurement report that indicates a measurement result in Step S101 (Step S103).

The macro base station MeNB selects the small cell S to which the user terminal UE is to be connected, based on the measurement report from the user terminal UE (Step S104). Specifically, the macro base station MeNB selects the small cell S to which the user terminal UE is to be connected, based on at least one of measurement values of radio quality in respective small cells S, the numbers of user terminals UE, traffic and so on.

For example, when the number of user terminals and/or traffic of a small cell S with the best measurement value is greater than a predetermined threshold, the macro base station MeNB may select a small cell with a second or later best measurement value.

Once selecting the small cell S, the macro base station MeNB transmits "RRC Reconfiguration" to the user terminal UE (Step S105). "RRC Reconfiguration" is instruction information that instructs it to connect to the selected small cell S and includes identification information of the small cell S.

When any of the small cells SeNB 1 to SeNB 6 operates as a control station, in Step S103 of Fig. 10, the user terminal UE may transmit the measurement report to the small base station SeNB that operates as a control station. In this case, the small base station operating as a control station may perform control to select the cell as described above.

(CONFIGURATION OF RADIO COMMUNICATION SYSTEM)

The following description is made in detail about a radio communication system according to the present embodiment. This radio communication system is applied with the above-described radio communication method.

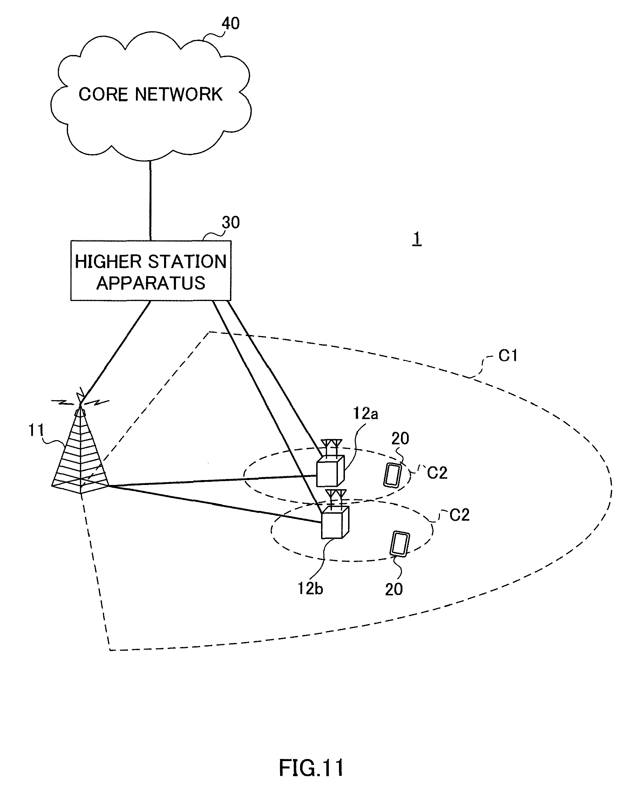

Fig. 11 is a schematic diagram illustrating the configuration of the radio communication system according to the present embodiment. As illustrated in Fig. 11, the radio communication system 1 includes a macro base station 11 that forms a macro cell C1 and small base stations 12a and 12b that form small cells C2 that are smaller than the macro cell C1. In the macro cell C1 and the small cells C2, user terminals 20 are located. The numbers of macro cells C1 (macro base station 11), small cells C2 (small base stations 12) and user terminals 20 are not limited to those illustrated in Fig. 11.

In addition, in the macro cell C1 and each small cell C2, a user terminal 20 is located. The user terminal 20 is configured to be able to wirelessly communicate with the macro base station 11 and/or small base station 12. The user terminal 20 is also able to communicate with a plurality of small base stations 12 by using aggregation of component carriers used in each small cell C2 (Carrier Aggregation). Or, the user terminal 20 is able to communicate with the macro base station 11 and the small base station 12 by aggregating component carriers respectively used in the macro cell C1 and the small cell C2.

Communication between the user terminal 20 and the macro base station 11 is performed using a carrier of relatively low frequency band (for example, 2 GHz). On the other hand, communication between the user terminal 20 and the small base station 12 is performed using a carrier of relatively high frequency band (for example, 3.5 GHz), however, these are not intended for limiting the present invention. The same frequency band may be used by the macro base station 11 and the small base station 12.

The macro base station 11 and each small base station 12 may be connected to each other by a relatively low-speed (medium delay) link such as X2 interface (Non-Ideal backhaul), by a relatively high-speed (low delay) link such as an optical fiber (Ideal backhaul) or by any wireless connection. Also, the small base stations 12 may be connected to each other by a relatively low-speed (medium delay) link such as X2 interface (Non-Ideal backhaul), by a relatively high-speed (low delay) link such as an optical fiber (Ideal backhaul) or by any wireless connection.

The macro base station 11 and each small base station 12 are each connected to a higher station apparatus 30, and then, connected to a core network 40 via the higher station apparatus 30. For example, the higher station apparatus 30 includes, but is not limited to, an access gateway apparatus, a radio network controller (RNC), a mobility management entity (MME), and so on.

The macro base station 11 is a radio base station having a relatively wide coverage area and may be called eNodeB (eNB), a radio base station, a transmission point or the like. The small base station 12 is a radio base station having a local coverage area and may be called RRH (Remote Radio Head), pico base station, femto base station, Home eNodeB, transmission point, eNodeB (eNB) or the like. The user terminal 20 is a terminal supporting any of various communication schemes such as LTE and LTE-A, and may include not only a mobile communication terminal, but also a stationary or fixed communication terminal.

In addition, in the radio communication system 1, as for downlink communication channels, there are used a PDSCH (Physical Downlink Shared Channel) that is used by each user terminal 20 on a shared basis, downlink control channels (PDCCH: Physical Downlink Control Channel, EPDCCH: Enhanced Physical Downlink Control Channel), PCFICH, PHICH, broadcast channel (PBCH) and so on. The PDSCH is used to transmit user data and higher control information. The PDCCH and EPDCCH are used to transmit downlink control information (DCI).

Also in the radio communication system 1, as for the uplink communication channels, there are used a PUSCH (Physical Uplink Shared Channel) that is used by each user terminal 20 on a shared basis, a PUCCH (Physical Uplink Control Channel) and so on. The PUSCH is used to transmit user data and higher layer control information. And, PUCCH is used to transmit downlink radio quality information (CQI: Channel Quality Indicator), transmission acknowledgement information (ACK/NACK) and so on.

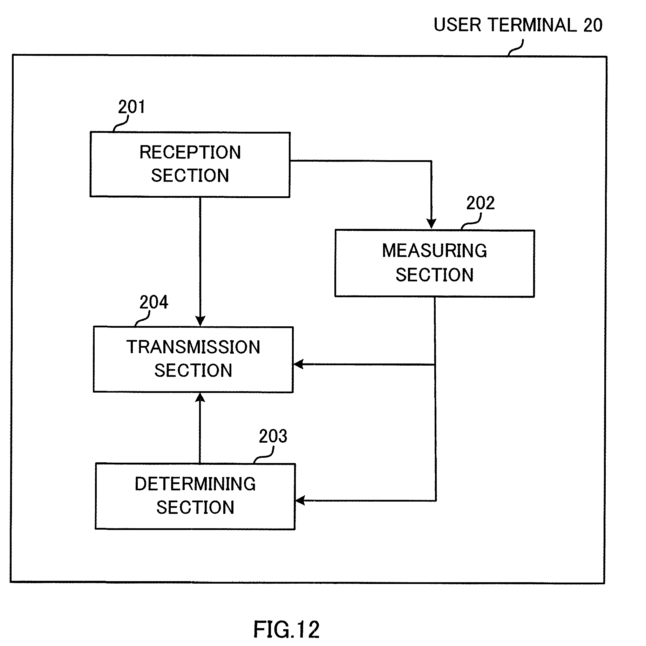

With reference to Figs. 12 to 14, description is made about the configurations of the user terminal 20, the macro base station 11 and the small base station 12. Each of the user terminal 20, the macro base station 11 and the small base station 12 has a hardware including communication interface, processor, memory, transmission/reception circuit and so on. In the memory, software module to be executed by the processor is stored. The configurations illustrated in Figs. 12 to 14 may be implemented by the above-described hardware or software module to be executed by the processor, or may be implemented by combination of them.

Fig. 12 is a block diagram illustrating the configuration of the user terminal 20 according to the present embodiment. As illustrated in Fig. 12, the user terminal 20 has a reception section 201, a measuring section 202, a determining section 203 and a transmission section 204.

The reception section 201 is configured to receive downlink signals (downlink data signals, downlink control signals, downlink reference signals, broadcast signals and so on) from the macro base station 11 and/or small base station 12. The reception section 201 receives higher layer control information from the macro base station 11 and/or small base station 12. The higher layer control information is control information given by RRC (Radio Resource Control) signaling or MAC signaling. The higher layer control information may include, for example, "RRC Reconfiguration".

Specifically, the reception section 201 receives measurement reference signals from each small base station 12. As described above, the measurement reference signals are reference signals that are orthogonal or quasi-orthogonal between small cells C2, and include, for example, channel state measurement reference signals (CSI-RSs), discovery signals and so on.

The measuring section 202 is configured to measure radio quality in each small cell C2. Specifically, the measuring section 202 measures radio quality in each small cell C2 using a measurement reference signal received by the reception section 201. As described above, the radio quality may be reception power of a measurement reference signal (for example, RSRP), reception quality of a measurement reference signal (for example, RSRQ, SINR, SNR, or the like) or path loss.

The determining section 203 determines whether the reporting condition of the measurement report is met or not. Specifically, the reporting condition is defined based on a comparative result of a ratio (Metric) of measurement values of radio quality in a plurality of small cells C2 with a threshold, and the measuring section 203 determines whether such a reporting condition is met or not.

Here, the reporting condition may be defined based on a comparative result between a ratio (Metric #0) of the best measurement value out of measurement values of radio quality in a plurality of small cells C2 to a sum of second and later best measurement values and a threshold (first embodiment).

Besides, the reporting condition may be defined based on a comparative result between a ratio (Metric #1$_i$) of the i-th best measurement value (i ≥ 2) out of measurement values of radio quality in a plurality of small cells C2 to a sum of i+1 and later best measurement values and a threshold (second embodiment). In the case of i = 2, 3, Metric #1$_2$, Metric #1$_3$ may be called Metric #1, Metric #1+, respectively.

In addition, the reporting condition may be defined based on a comparative result between a ratio (Metric #2$_i$) of the i-th best measurement value (i ≥ 2) out of measurement values of radio quality in a plurality of small cells C2 to the best measurement value and a threshold (third embodiment). In the case of i = 2, 3, Metric #2$_2$, Metric #2$_3$ may be called Metric #2, Metric #2+, respectively.

Besides, the reporting condition may be defined based on a comparative result between a ratio (Metric #3$_i$) of the i-th best measurement value (i ≥ 2) out of measurement values of radio quality in a plurality of small cells C2 to a sum of the measurement values of the plural small cells C2 and a threshold (fourth embodiment). In the case of i = 2, 3, Metric #3$_2$, Metric #3$_3$ may be called Metric #3, Metric #3+, respectively.

Besides, the reporting condition may be defined based on a comparative result between a ratio (Metric #4$_i$) of a sum of the i-th and later best measurement values (i ≥ 2) out of measurement values of radio quality in a plurality of small cells C2 to a sum of the i+1-th and later measurement values and a threshold (fifth embodiment). In the case of i = 2, 3, Metric #4$_2$, Metric #4$_3$ may be called Metric #4, Metric #4+, respectively.

The transmission section 204 transmits, to the macro base station 11 and/or small base station 12, uplink signals (uplink data signals, uplink control signals, uplink reference signals, and so on). The transmission section 204 transmits higher layer control information to the macro base station 11 and/or small base station 12.

Specifically, when the determining section 203 has determined that the reporting condition is met, the transmission section 204 transmits a measurement report to the macro base station 11. The transmission section 204 may transmit the measurement report, as higher layer control information, by higher layer signaling such as RRC signaling. The measurement report may include measurement values of radio quality in the plural small cells C2 measured by the measuring section 202.

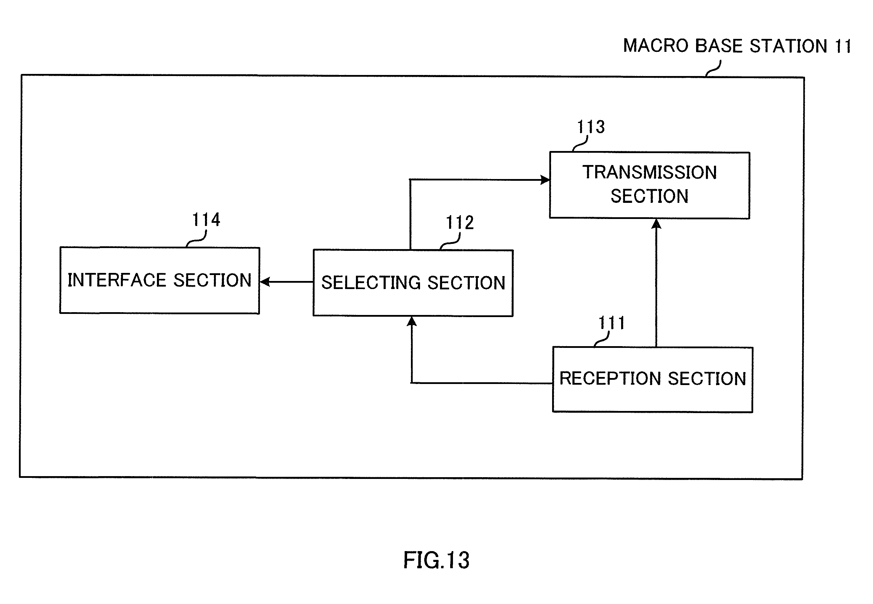

Fig. 13 is a diagram illustrating the configuration of a macro base station 11 according to the present embodiment. As illustrated in Fig. 13, the macro base station 11 includes a reception section 111, a selecting section 112, a transmission section 113 and an interface section 114.

The reception section 111 receives uplink signals (uplink data signals, uplink control signals, uplink reference signals, and so on) from the user terminal 20. The reception section 111 receives higher layer control information from the user terminal 20.

Specifically, the reception section 111 receives the above-mentioned measurement report from the user terminal 20 of which the report condition is met. The reception section 111 may receive the measurement report as higher layer control information by higher layer signaling such as RRC signaling.

The selecting section 112 selects a small cell C2 to which the user terminal 20 is to be connected, based on the measurement report received by the reception section 111. Specifically, the selecting section 112 selects a small cell C2 to which the user terminal 20 is to be connected, based on at least one of the measurement values of radio quality in the respective small cells C2, the numbers of user terminals 20, traffic and so on.

The transmission section 113 transmits downlink signals (downlink data signals, downlink control signals, downlink reference signals, broadcast signals, and so on). The transmission section 113 transmits higher layer control information to the user terminal 20.

Specifically, once the selecting section 112 has selected a small cell C2, the transmission section 113 transmits "RRC Recofigutation" to the user terminal UE. "RRC Reconfiguration" is instruction information that instructs the user terminal 20 to be connected to the selected small cell C2, and includes identification information of the small cell C2.

The interface section 114 performs transmission and reception of signals with another macro base station 11 and/or small base station 12 or the higher station apparatus 30.

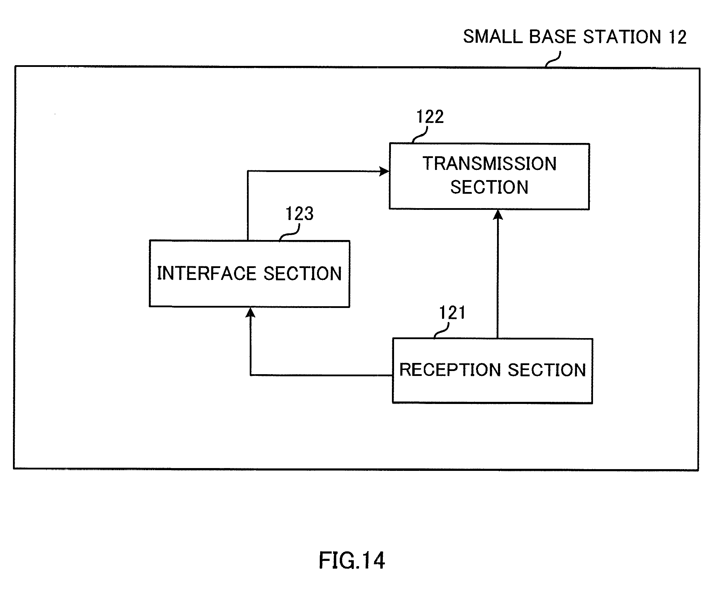

Fig. 14 is a diagram illustrating the configuration of the small base station 12 according to the present embodiment. As illustrated in Fig. 14, the small base station 12 has a reception section 121, a transmission section 122 and an interface section 123. When the small base station 12 operates as a control station (when the small base station 12 receives a measurement report from the user terminal 20), the small base station 12 may have such a selecting section 113 as provided in the macro base station 11.

The reception section 121 receives uplink signals (uplink data signals, uplink control signals, uplink reference signals and so on) from the user terminal 20. The reception section 121 may receive higher layer control information from the user terminal 20.

The transmission section 122 transmits downlink signals (downlink data signals, downlink control signals, downlink reference signals and so on) to the user terminal 20. The transmission section 122 may transmit higher layer control information to the user terminal 20.

Specifically, the transmission section 122 transmits measurement reference signals that are orthogonal or quasi-orthogonal to measurement reference signals of other small cells C2. The measurement reference signals may include, for example, channel state measurement reference signals (CSI-RS), discovery signals and so on.

The interface section 123 may perform transmission and reception of signals with the macro base station 11 and/or any other small base station 12 or the higher station apparatus 30. In the above-described example, the measurement report and the signal (RRC Reconfiguration) to instruct selection of a small cell C2 are RRC layer control signals, however, they may be MAC layer control signals or physical layer control signals.

In the radio communication system 1, the reporting condition is not defined based on a comparative result between any of measurement values of radio quality in the plural small cells C2 per se and a predetermined threshold, but based on a comparative result between a ratio of measurement values and a predetermined threshold. With this structure, the user terminal UE is able to transmit a measurement report in the timing suitable for connecting the user terminal UE to a neighbor cell adjacent to a small cell C2 of the best radio quality. Consequently, it is possible to achieve load balancing between small cells C2.

Up to this point, the present invention has been described in detail by way of the above-described embodiments. However, a person of ordinary skill in the art would understand that the present invention is not limited to the embodiments described in this description. The present invention could be embodied in various modified or altered forms without departing from the gist or scope of the present invention defined by the claims. Therefore, the statement in this description has been made for the illustrative purpose only and not to impose any restriction to the present invention.

The disclosure of Japanese Patent Application No. 2013-062379 filed on March 25, 2013, including the specification, drawings, and abstract, is incorporated herein by reference in its entirety.

**Claims**

1. A user terminal in a radio communication system in which a macro cell and a plurality of small cells are located in an overlapping manner, the user terminal comprising:

   a measuring section that measures radio quality in the small cells; and
   a transmission section that, when a reporting condition is met, transmits a measurement report including a measurement result by the measuring section,
   wherein the reporting condition is defined based on a comparative result between a ratio about measurement values of radio quality of the small cells and a predetermined threshold.

2. The user terminal according to claim 1, wherein the reporting condition is defined based on the comparative result between the ratio of a best measurement value out of the measurement values of radio quality of the small cells to a sum of second and later best measurement values out of the measurement values and the predetermined threshold.

3. The user terminal according to claim 1, wherein the reporting condition is defined based on the comparative result between the ratio of an i-th best measurement value ($i \geq 2$) out of the measurement values of radio quality of the small cells to a sum of i+1-th and later best measurement values out of the measurement values and the predetermined threshold.

4. The user terminal according to claim 1, wherein the reporting condition is defined based on the comparative result between the ratio of an i-th best measurement value ($i \geq 2$) out of the measurement values of radio quality of the small cells to a best measurement value out of the measurement values and the predetermined threshold.

5. The user terminal according to claim 1, wherein the reporting condition is defined based on the comparative result between the ratio of an i-th best measurement value ($i \geq 2$) out of the measurement values of radio quality of the small cells to a sum of the measurement values of the small cells and the predetermined threshold.

6. The user terminal according to claim 1, wherein the reporting condition is defined based on the comparative result between the ratio of a sum of i-th and later best measurement values ($i \geq 2$) out of the measurement values of radio quality of the small cells to a sum of i+1-th and later best measurement values of the measurement values and the predetermined threshold.

7. The user terminal according to any one of claims 1 to 6, wherein the measuring section measures the radio quality using reference signals that are orthogonal or quasi-orthogonal between the small cells.

8. A radio base station in a radio communication system in which a macro cell and a plurality of small cells are located in an overlapping manner, the radio base station forming the macro cell, the radio base station comprising:

a reception section that receives a measurement report including a measurement result of radio quality in the small cells from a user terminal of which a reporting condition is met;

a selecting section that selects a small cell to which the user terminal is to be connected, based on the measurement report,

wherein the reporting condition is defined based on a comparative result between a ratio about measurement values of radio quality of the small cells and a predetermined threshold.

9. A radio communication method in a radio communication system in which a macro cell and a plurality of small cells are located in an overlapping manner, the radio communication method comprising:

measuring, in a user terminal, radio quality in the small cells; and

when a reporting condition is met, transmitting, in the user terminal, a measurement report including a measurement result,

wherein the reporting condition is defined based on a comparative result between a ratio about measurement values of radio quality of the small cells and a predetermined threshold.

10. The radio communication method according to claim 9, further comprising:

receiving, in a radio base station forming the macro cell, the measurement report from the user terminal; and

selecting, in the radio base station forming the macro cell, a small cell to which the user terminal is to be connected, based on the measurement report.

SMALL CELLS
CLUSTER

MACRO CELL (OUTDOOR) AND SMALL CELL (OUTDOOR)

- - - - - - - -  BACKHAUL LINK WITHIN CLUSTER

————————  BACKHAUL LINK BETWEEN SMALL CELLS AND MACRO CELL

FIG.1

EP 2 981 126 A1

FIG.2

EP 2 981 126 A1

FIG.3A

FIG.3B

FIG.4

- Metric #0:

  $Metric\#0 = 1^{st}\ RSRP\ /\ (2^{nd}\ RSRP + 3^{rd}\ RSRP + 4^{th}\ RSRP + ...)$

- Event trigger :

  (#0-1) Metric #0 is greater than a predetermined threshold
  (#0-2) Metric #0 is less than a predetermined threshold

FIG.5

- Metric #1:

  $Metric\#1 = 2^{nd}\ RSRP\ /\ (3^{rd}\ RSRP + 4^{th}\ RSRP + ...)$
  $Metric\ \#1+ = 3^{rd}\ RSRP/\ (4^{th}\ RSRP + 5^{th}\ RSRP + ...)$

- Event trigger:

  (#1-1) Metric #1 is greater than a predetermined threshold
  (#1-2) Metric #1 is less than a predetermined threshold
  (#1-3) Metric #1+ is greater than a predetermined threshold
  (#1-4) Metric #1+ is less than a predetermined threshold

FIG.6

- Metric #2:

    Metric #2 = $2^{nd}$ RSRP/$1^{st}$ RSRP

    Metric#2+ = $3^{rd}$ RSRP /$1^{st}$ RSRP

- Event trigger:

    (#2-1) Metric #2 is greater than a predetermined threshold

    (#2-2) Metric #2 is less than a predetermined threshold

    (#2-3) Metric #2+ is greater than a predetermined threshold

    (#2-4) Metric #2+ is less than a predetermined threshold

## FIG.7

- Metric #3:

    Metric #3 = $2^{nd}$ RSRP/RSSI

    Metric#3+ = $3^{rd}$ RSRP /RSSI

- Event trigger:

    (#3-1) Metric #3 is greater than a predetermined threshold

    (#3-2) Metric #3 is less than a predetermined threshold

    (#3-3) Metric #3+ is greater than a predetermined threshold

    (#3-4) Metric #3+ is less than a predetermined threshold

## FIG.8

- New Metric #4:

  Metric #4 = (2$^{nd}$ RSRP + 3$^{rd}$ RSRP + 4$^{th}$ RSRP + 5$^{th}$ RSRP …)/
  (3$^{rd}$ RSRP + 4$^{th}$ RSRP + 5$^{th}$ RSRP + …)

  Metric#4+ = (3$^{rd}$ RSRP + 4$^{th}$ RSRP + 5$^{th}$ RSRP …)/
  (4$^{th}$ RSRP + 5$^{th}$ RSRP + …)

- Event trigger:

  (#4-1) Metric #4 is greater than a predetermined threshold
  (#4-2) Metric #4 is less than a predetermined threshold
  (#4-3) Metric #4+ is greater than a predetermined threshold
  (#4-4) Metric #4+ is less than a predetermined threshold

FIG.9

FIG.10

FIG.11

FIG.12

EP 2 981 126 A1

FIG.13

122

TRANSMISSION
SECTION

123

INTERFACE SECTION

121

RECEPTION SECTION

EP 2 981 126 A1

FIG.14

<div align="center">

**INTERNATIONAL SEARCH REPORT**

</div>

| | International application No. |
|---|---|
| | PCT/JP2014/054109 |

**A. CLASSIFICATION OF SUBJECT MATTER**
*H04W24/10*(2009.01)i, *H04W16/08*(2009.01)i, *H04W16/32*(2009.01)i, *H04W48/16*(2009.01)i

According to International Patent Classification (IPC) or to both national classification and IPC

**B. FIELDS SEARCHED**

Minimum documentation searched (classification system followed by classification symbols)
H04W4/00-99/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2012/0302227 A1 (KREUZER Werner, HOLE David Philip), 29 November 2012 (29.11.2012), paragraphs [0036], [0037], [0041], [0053] to [0077] & WO 2012/065652 A1 | 1-10 |
| A | WO 2013/021531 A1 (PANASONIC CORP.), 14 February 2013 (14.02.2013), paragraphs [0206], [0225] to [0227] (Family: none) | 1-10 |
| A | WO 2011/097730 A1 (RESEARCH IN MOTION LTD.), 18 August 2011 (18.08.2011), paragraphs [0026] to [0058]; table 1 & US 2012/0315890 A1 & EP 2360962 A2 & CN 102860063 A | 1-10 |

| ☒ | Further documents are listed in the continuation of Box C. | ☐ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 30 April, 2014 (30.04.14) | 13 May, 2014 (13.05.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/054109

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2011/102623 A2 (SAMSUNG ELECTRONICS CO., LTD.), 25 August 2011 (25.08.2011), [49] to [71] & US 2012/0307669 A1 | 1-10 |
| A | WO 2008/084662 A1 (NTT DOCOMO, INC.), 17 July 2008 (17.07.2008), paragraphs [0009] to [0023] & JP 2008-172380 A    & US 2010/0105377 A1 & US 2013/0143571 A1    & EP 2117135 A1 & KR 10-2009-0095671 A   & CN 101617545 A | 1-10 |
| A | 3GPP TS 36.331 V11.3.0, 2013.03.18, pp.88-95 | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2013062379 A

### Non-patent literature cited in the description

- E-UTRA Further advancements for E-UTRA physical layer aspects. *3GPP TR 36.814*